Europäisches Patentamt

European Patent Office

Office européen des brevets

(19)

(11) Numéro de publication : **0 391 762 B1**

(12)

# FASCICULE DE BREVET EUROPEEN

(45) Date de publication du fascicule du brevet :
**22.01.92 Bulletin 92/04**

(51) Int. Cl.⁵ : **F16L 5/02,** F16L 37/00

(21) Numéro de dépôt : **90400777.0**

(22) Date de dépôt : **21.03.90**

(54) Fixation d'un conduit flexible de frein.

(30) Priorité : **07.04.89 FR 8904933**

(43) Date de publication de la demande :
**10.10.90 Bulletin 90/41**

(45) Mention de la délivrance du brevet :
**22.01.92 Bulletin 92/04**

(84) Etats contractants désignés :
**DE ES GB IT**

(56) Documents cités :
**FR-A- 2 214 847**
**US-A- 2 468 847**
**US-A- 4 756 558**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Garido de la Hoz, Fernand**
**49, avenue des Martyrs de Chateaubriand**
**F-77290 Mitry-le-neuf (FR)**

(74) Mandataire : **Boivin, Claude**
**9, rue Edouard-Charton**
**F-78000 Versailles (FR)**

Jouve, 18, rue Saint-Denis, 75001 PARIS

## Description

L'invention concerne un dispositif de fixation d'un conduit flexible de frein pour véhicule automobile.

De nombreux véhicules comportent un étrier de frein monté sur chaque moyeu de roue et raccordé hydrauliquement à une source de pression, généralement un maître-cylindre monté sur la caisse.

Le circuit hydraulique qui les relie se compose en général d'un tube rigide solidaire de la caisse et raccordé au maître-cylindre, d'un tube rigide solidaire du moyeu de roue et raccordé à l'étrier de frein, et d'un flexible propre à se déformer pendant le débattement de la suspension ou le pivotement de la roue quand elle est directrice. Généralement, le flexible est muni à ses deux extrémités de deux embouts femelles sur lesquels viennent se raccorder des embouts mâles tant du côté du moyeu de roue que du côté de la caisse.

Pour garantir l'orientation correcte de l'embout femelle pendant les débattements du flexible, l'embout femelle est muni de cannelures engagées dans les cannelures d'un support solidaire de la caisse ou du moyeu. Une collerette de cet embout femelle vient en butée sur le support.

Le dispositif de fixation comporte en outre un cavalier qui prend appui sur le support et sert de butée à l'embout.

Mais le montage de ce dispositif est compliqué. Il faut d'abord mettre le conduit flexible dans le support, placer le cavalier par dessus et en même temps assembler le raccord hydraulique. Il en est de même si on veut démonter le dispositif pour effectuer une réparation. Dès que le raccord hydraulique est démonté, le conduit flexible et le cavalier ne sont plus maintenus.

La présente invention a pour objet un perfectionnement apporté à ce dispositif de fixation dans le but d'éviter les inconvénients qui viennent d'être signalés.

Le dispositif de fixation selon l'invention est caractérisé en ce que le cavalier présente deux languettes pouvant s'encliqueter dans une rainure annulaire de l'embout femelle pour maintenir ce dernier sur le support lorsque l'embout mâle est deconnecté.

Le montage est facilité car le cavalier est maintenu sur le support lorsqu'on assemble les embouts mâle et femelle. Par ailleurs, lorsqu'on désaccouple ces embouts pour effectuer une réparation, l'embout, le conduit flexible et le cavalier restent assemblés au support.

On a décrit ci-après, à titre d'exemple non limitatif, un mode de réalisation du dispositif selon l'invention, avec référence au dessin annexé dans lequel :

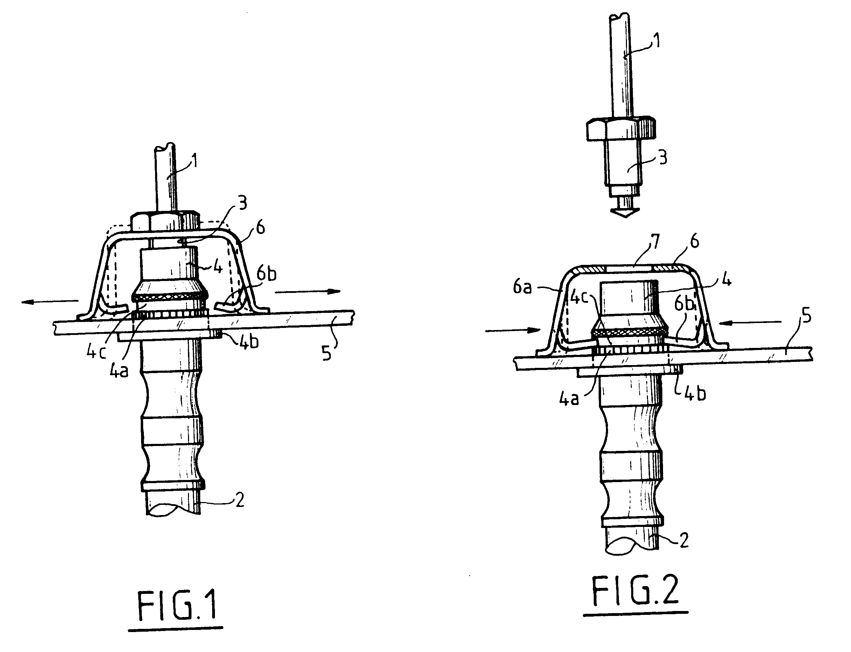

La Figure 1 montre en élévation le dispositif monté ;

La Figure 2 est une vue semblable à la Figure 1, l'embout mâle étant séparé.

Au dessin, on voit un tube rigide 1 solidaire de la caisse d'un véhicule ou d'un moyeu de roue, qui doit être relié à un conduit flexible 2 ; à cet effet, le tube rigide 1 porte un embout mâle 3 pouvant être accouplé à un embout femelle 4 du flexible. L'embout femelle présente des cannelures 4a engagées dans des cannelures de formes correspondantes ménagées dans un support 5 fixé à la caisse ou au moyeu de roue ; il présente également une collerette 4b en butée sur le support 5.

Un cavalier 6 en feuillard replié en forme de U présente deux pattes 6a prenant appui sur le support 5. Il comporte un trou central 7 pour le passage de l'embout mâle 3 et sert de butée à cet embout quand celui-ci est accouplé à l'embout femelle. Ce cavalier 6 est suffisamment souple pour que le montage étanche de l'embout mâle dans l'embout femelle puisse se faire avec l'embout mâle et l'embout femelle respectivement en butée contre le cavalier 6 et le support 5.

Deux languettes 6b disposées symétriquement sont découpées dans les pattes 6a et repliées vers l'intérieur. L'embout femelle 4 présente une rainure annulaire 4c dans laquelle ces languettes peuvent s'encliqueter, ce qui assure le maintien de l'embout femelle 4 sur le support 5 lorsque le raccord hydraulique est démonté. Lorsque l'accouplement est réalisé, le cavalier 6 se déforme et les pattes 6b se dégagent de la rainure 4c, mais elles reprennent élastiquement bien leur place lorsqu'on démonte le raccord.

## Revendications

1. Dispositif de fixation d'un conduit flexible sur un tube rigide comprenant un embout mâle (3), solidaire du tube, un embout femelle (4) solidaire du conduit flexible, dans lequel peut s'accoupler l'embout mâle et qui présente une collerette (4b) propre à venir prendre appui sur un support (5) traversé par cet embout femelle, et un cavalier en U (6) propre à prendre appui sur le support (5) et à servir de butée à l'embout mâle (3), caractérisé en ce que le cavalier (6) présente deux languettes (6b) pouvant s'encliqueter dans une rainure annulaire (4c) de l'embout femelle (4) pour maintenir ce dernier sur le support (5) lorsque l'embout mâle (3) est déconnecté.

2. Dispositif selon la revendication 1, caractérisé en ce que les languettes (6b) sont issues de pattes d'appui (6a) du cavalier (6).

## Patentansprüche

1. Vorrichtung zur Befestigung einer flexiblen Leitung an einem starren Rohr mit einer Einsteckmuffe (3), die fest mit dem Rohr verbunden ist und einer Aufnahmemuffe (4), die fest mit der flexiblen Leitung verbunden ist, in welche die Einsteckmuffe einkuppelbar ist und die einen Kragen (4b) aufweist, der dazu geeignet ist, sich an einem von dieser Aufnahmemuffe durchsetzten Träger (5) abzustützen und mit einer U-förmigen Klammer (6), die dazu geeignet ist, sich am Träger (5) abzustützen und als Anschlag für die Einsteckmuffe (3) zu dienen, dadurch gekennzeichnet, daß die Klammer (6) zwei Zungen (b) aufweist, die in eine Ringnut (4c) der Aufnahmemuffe (4) einrasten können, um diese Letztere am Träger (5) festzuhalten, wenn die Einsteckmuffe (3) abgekuppelt ist.

2. Vorrichtung nach Anspruch 1, dadurch gekennzeichnet, daß die Zungen (6b) aus Stützfüßen (6a) der Klammer (6) hervorgehen.

## Claims

1. Device for attaching a hose on a rigid tube including one male end piece (3) integral with the tube, one female end piece (4) integral with the hose and to which the male end piece is able to be coupled and which has one collar (4b) able to take support on a support (5) traversed by this female end piece, and one U-clip (6) able to take support on the support (5) and used as a stop for the male end piece (3), wherein the clip (6) has two lugs (6b) able to interlock inside an annular groove (4c) of the female end piece (4) so as to keep the latter on the support (5) when the male end piece (3) is disconnected.

2. Device according to claim 1, wherein the lugs (6b) are derived from the support brackets (6a) of the clip (6).

FIG.1

FIG.2